(19) Europäisches Patentamt
European Patent Office
Office européen des brevets

(11) **EP 2 701 049 A2**

(12) **EUROPEAN PATENT APPLICATION**

(43) Date of publication:
**26.02.2014 Bulletin 2014/09**

(51) Int Cl.:
*G06F 3/0483* (2013.01)     *G06F 3/0488* (2013.01)
*G06F 3/0346* (2013.01)

(21) Application number: **13181412.1**

(22) Date of filing: **22.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.08.2012   KR 20120091737**

(71) Applicant: **Samsung Electronics Co., Ltd**
**Gyeonggi-do 443-742 (KR)**

(72) Inventor: **Park, Jin-Seok**
**443-742 Gyeonggi-do (KR)**

(74) Representative: **Birchenough, Lewis**
**Harrison Goddard Foote LLP**
**Saviour House**
**9 St Saviourgate**
**York YO1 8NQ (GB)**

(54) **Apparatus and method for controlling electronic book in portable terminal**

(57)     An apparatus and a method for controlling an electronic book in a portable terminal are provided. The method includes displaying a particular page of an electronic book selected from pre-stored electronic books, when an electronic book fore-edge display gesture is input, displaying a fore-edge of the electronic book while displaying the particular page, when a page turn gesture is input to the displayed fore-edge, determining a page based on the page turn gesture, and displaying the determined page.

FIG. 5

EP 2 701 049 A2

**Description**

**BACKGROUND OF THE INVENTION**

1. Field of the Invention:

The present invention relates generally to a portable terminal. More particularly, the present invention relates to an apparatus and a method for controlling an electronic book.

2. Description of the Related Art:

Currently, portable terminals such as a smart phone, a tablet and the like provide many useful functions to users through a plurality of various applications. Accordingly, the portable terminal is capable of using various types of information as well as a voice communication function through the provision of the various functions.

Among the various applications, there is an electronic book application for providing an electronic book for user consumption. The electronic book application provides, when a particular page number is input by the user through a menu, moving to the input page number. However, the application takes a long time to perform turning the plurality of pages.

The above information is presented as background information only to assist with an understanding of the present disclosure. No determination has been made, and no assertion is made, as to whether any of the above might be applicable as prior art with regard to the present invention.

**SUMMARY OF THE INVENTION**

Aspects of the present invention are to address at least the above-mentioned problems and/or disadvantages and to provide at least the advantages described below. Accordingly, an aspect of the present invention is to provide an  apparatus and a method for controlling an electronic book to turn a plurality of pages at one time.

In accordance with an aspect of the present invention, an apparatus for controlling an electronic book in a portable terminal is provided. The apparatus includes a display unit, a memory unit for storing one or more electronic books, and a controller for displaying a particular page of an electronic book selected from the stored electronic books through the display unit, displaying a fore-edge of the electronic book while displaying the particular page when an electronic book fore-edge display gesture is input, determining a page based on a page turn gesture when the page turn gesture is input to the displayed fore-edge, and displaying the determined page through the display unit.

In accordance with another aspect of the present invention, a method of controlling an electronic book in a portable terminal is provided. The method includes displaying a particular page of an electronic book selected from pre-stored electronic books, when an electronic book fore-edge display gesture is input, displaying a fore-edge of the electronic book while displaying the particular page, when a page turn gesture is input to the displayed fore-edge, determining a page based on the page turn gesture; and displaying the determined page.

Accordingly, the present invention has an effect of turning a plurality of pages at one time by controlling an electronic book.

Other aspects, advantages, and salient features of the invention will become apparent to those skilled in the art from the following detailed description, which, taken in conjunction with the annexed drawings, discloses exemplary embodiments of the invention.

**BRIEF DESCRIPTION OF THE DRAWINGS**

The above and other aspects, features, and advantages of certain exemplary embodiments of the present invention will be more apparent from the following description taken in conjunction with the accompanying drawings, in which:

FIG. 1 is a block diagram of a portable terminal according to an exemplary embodiment of the present invention;

FIG. 2 is a flowchart illustrating a method of controlling an electronic book in a portable terminal according to an exemplary embodiment of the present invention;

FIG. 3 is a flowchart illustrating a method of displaying a page of an electronic book in a portable terminal according to a first exemplary embodiment of the present invention;

FIG. 4 is a flowchart illustrating a method of displaying a page of an electronic book in a portable terminal according to a second exemplary embodiment of the present invention;

FIG. 5 illustrates a screen displaying a fore-edge of an electronic book in a portable terminal according to an exemplary embodiment of the present invention;

FIG. 6 illustrates a screen displaying the page of the electronic book in the portable terminal according to the first exemplary embodiment of the present invention; and

FIG. 7 illustrates a screen displaying the page of the electronic book in the portable terminal according to the second exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A portable terminal according to an exemplary embodiment of the present invention is a movable electronic device which is easily carried, and may include a video telephone, a mobile phone, a smart phone, an International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an electronic-book (e-book), portable computers (e.g., a notebook, a tablet and the like), a digital camera or the like.

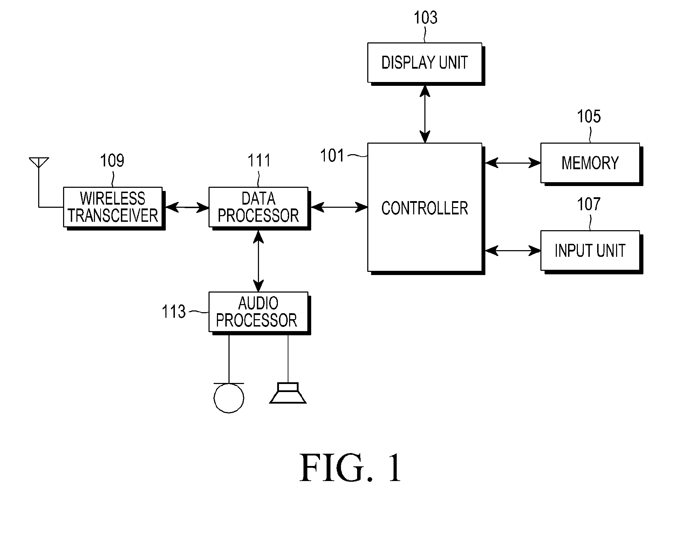

FIG. 1 is a block diagram of the portable terminal according to an exemplary embodiment of the present invention.

Referring to FIG. 1, the portable terminal includes a controller 101, a display unit 103, a memory unit 105, an input unit 107, a wireless transceiver 109, a data processor 111, an audio processor 113, and a gyro sensor unit (not shown).

Referring to each component, the wireless transceiver 109 performs a wireless communication function of a mobile terminal. In a more detailed description, the wireless transceiver 109 includes a wireless transmitter for up-converting and amplifying a frequency of a transmitted signal, a wireless receiver for low noise-amplifying a received signal and down-converting a frequency and the like. Further, the data processor 111 includes a baseband transmitter for encoding and modulating the transmitted signal, a baseband receiver for demodulating and decoding the received signal and the like. Here, the data processor 111 may be configured by a modulator/demodulator (modem) and a compressor/decompressor (codec), and the codec may include a data codec for processing packet data and the like and an audio codec for processing an analog audio signal such as a voice.

Further, the audio processor 113 performs a function of reproducing a received audio signal that is output from the data processor 111 through a speaker (not shown). The data processor is also configured for transmitting a transmission audio signal generated from a microphone (not shown) to the data processor 111. In addition, the input unit 107 includes keys for inputting number and character information and function keys for setting various functions. The display unit 103 displays an image signal on a screen and displays data that is output from the controller 101. Here, the display unit 103 can be implemented by a Liquid Crystal Display (LCD), and in this case, the display unit 103 may include an LCD controller, a memory for storing image data, an LCD display element and the like. When the LCD is implemented in a touch screen type, the LCD may operate as the input unit and keys such as those included in the input unit 107 may be displayed via the display unit 103.

The memory unit 105 includes a program memory and a data memory. The program memory stores a booting system and an operating system (hereinafter, referred to as an "OS") for controlling a general operation of the mobile terminal, and the data memory stores various data generated during the operation of the mobile terminal. Particularly, the memory unit 105 stores one or more e-books for the user's consumption. Further, the gyro sensor unit (not shown) outputs angular information according to a motion of the portable terminal.

In addition, the controller 101 controls the general operation of the mobile terminal. Particularly, the controller 101 is configured to display a page requested by the user in the e-book.

The controller 101 identifies whether an execution of an electronic book application is requested by the user.

Here, the electronic book application refers to an application for outputting the electronic book selected by the user through the display unit 103. If the execution of the electronic book application is requested, the controller 101 executes the electronic book application and outputs an electronic book through the display unit 103. At this time, the controller 101 may output the electronic book as images on the display unit 103.

Further, the controller 101 identifies whether an electronic book is selected by the user. As a result of the identification, when the electronic book is selected, the controller 101 searches for the selected electronic book in the memory unit 105 and outputs a particular page of the selected electronic book through the display unit 103. Here, the particular page refers to a page designated in advance.

The controller 101 determines if a fore-edge display gesture request is input by the user for displaying a fore-edge with the selected electronic book. Here, the fore-edge display gesture comprises axially rotating a right side or a left side of the portable terminal in an upward direction. As a result of the determination, when the fore-edge display gesture is input, the controller 101 displays a right fore-edge or a left fore-edge based on the displayed page.

For example, the controller 101 may identify whether the right side or the left side of the portable terminal axially rotates in the upward direction by at least a predetermined angle. For example, the controller may determine the axial rotation of the portable terminal using the gyro sensor (not shown) and the predetermined angle may be determined within a range from 10 to 90 degrees, and the upward direction refers to a direction perpendicular to a front surface of the portable terminal.

As a result of the determination, when the right side of the portable terminal axially rotates, the controller 101 may display the displayed page and the right fore-edge in the right side of the displayed page. When the left side of the portable terminal axially rotates, the controller 101 may display the displayed page and the left fore-edge in the left side of the displayed page. Here, the fore-edge is a part where an electronic book can be opened, the right fore-edge refers to a fore-edge located on the right side of the displayed page, and the left fore-edge refers to a fore-edge located on the left side of the displayed page.

Further, the controller 101 identifies whether a page turn gesture for turning the page is input by the user. The page turn gesture includes a first gesture of touching a particular page in the displayed fore-edge and a second gesture of dragging from the displayed page to the particular page within the displayed fore-edge. As a result of the identification when the page turn gesture is input, the controller 101 determines a page corresponding to the page turn gesture.

When the page turn gesture is the first gesture, the controller 101 may determine a page by using Equation (1):

$$F \times (C / B) = X \qquad \ldots\ldots\ldots\ldots\ldots\ldots \text{Equation (1)}$$

In Equation (1), F denotes the number of pages of the displayed fore-edge, C denotes a horizontal length from a start part to a touch part of the displayed fore-edge, B denotes a horizontal length of the displayed fore-edge, and X denotes a predetermined page number.

On the other hand, when the page turn gesture is the second gesture, the controller 101 may determine a page by using Equation (2):

$$F \times (D / B) = X \qquad \ldots\ldots\ldots\ldots\ldots\ldots.. \text{Equation (2)}$$

In Equation (2), F denotes the number of pages of the displayed fore-edge, D denotes a horizontal length from a start part of the displayed fore-edge to a dragged particular part of the fore-edge, B denotes a horizontal length of the displayed fore-edge, and X denotes a predetermined page number.

Further, the controller 101 outputs the determined page through the display unit 103 and may display an image showing that the displayed page is turned to the determined page. In addition, the controller 101 may display an image showing that the page is turned, while gradually reducing a speed at which the displayed page is turned to the determined page. At this time, the controller 101 may determine the speed at which the page is turned, by using Equation (3)

$$A + E = Y$$
$$Y \times Z = V \qquad \ldots\ldots\ldots\ldots\ldots\ldots\ldots \text{Equation (3)}$$

In Equation (3), A denotes a rotation angle of the portable terminal, E denotes a value generated by subtracting information on the current page from the determined page number, Y denotes a weight value of the page speed, Z denotes a predetermined page speed, and V denotes a determined page speed.

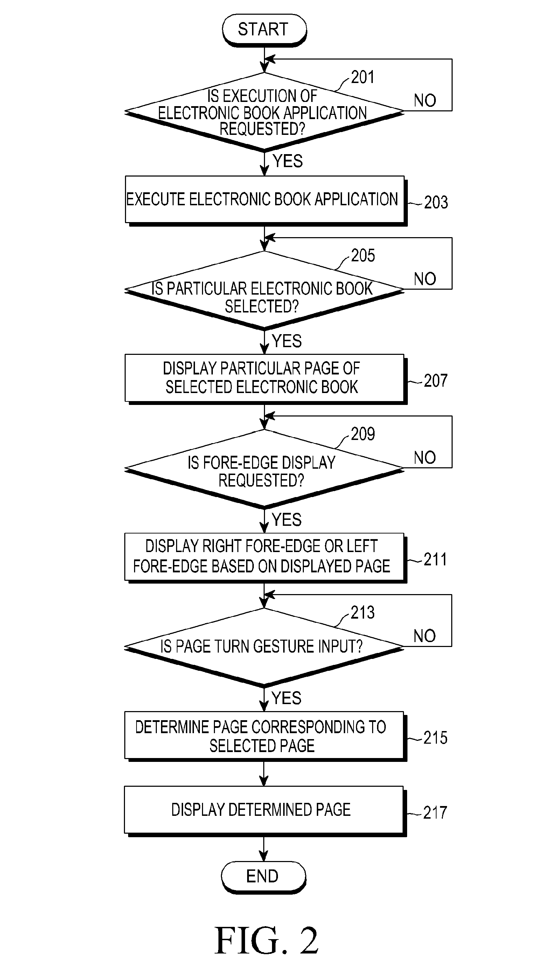

FIG. 2 is a flowchart illustrating a method of controlling the electronic book in the portable terminal according to an exemplary embodiment of the present invention.

Referring to FIG. 2, in step 201, the controller 101 identifies whether an execution of an electronic book application is requested by the user. The electronic book application refers to an application for outputting the electronic book through the display unit 103. As a result of the identification, when the execution of the electronic book application is requested, the controller 101 proceeds to step 203. Otherwise, the controller 101 returns to step 201.

At step 203, the controller 101 executes the electronic book application for outputting an electronic book through the display unit 103, and proceeds to step 205. The controller 101 may output the one or more electronic books as images for the user's consumption.

At step 205, the controller 101 determines if one of the displayed electronic books is selected by the user. As a result of the determination, when one of the electronic books is selected, the controller 101 proceeds to step 207. If an electronic book is not selected, the controller 101 returns to step 205 until an electronic book is selected. At step 207, the controller 101 searches for the selected electronic book in the memory unit 105, outputs a particular page of the found electronic book through the display unit 103, and then proceeds to step 209. The particular page generally refers to a predetermined page. At step 209, the controller 101 identifies whether a fore-edge display gesture for displaying a fore-edge is input by the user. The fore-edge display gesture includes a gesture of axially rotating a right side or a left side of the portable in an upward direction. As a result of the input of the fore edge display gesture, the controller 101 proceeds to step 211. If no fore-edge display gesture is input, the controller 101 returns to step 209. At step 211, the controller 101 displays a right fore-edge or a left fore-edge based on the displayed page, and then proceeds to step 213.

For example, the controller 101 may identify whether the right side or the left side of the portable terminal axially rotates in the upward direction by at least a predetermined angle. At this time, the controller may identify the axial rotation of the portable terminal via a gyro sensor (not shown). Here, the predetermined angle may be within a range of 10 to 90 degrees, and the upward direction refers to a direction perpendicular to a front surface of the portable terminal (i.e., axially along a vertical center axis of the display 103).

As a result of the identification, when the right side of the portable terminal is axially rotated, the controller 101 may display the displayed page and the right fore-edge on the right side of the displayed page. On the other hand, when the left side of the portable terminal is axially rotated, the controller 101 may display the displayed page and the left fore-edge on the left side of the displayed page. The fore-edge generally refers to a part where the electronic book can be opened, the right fore-edge refers to a fore-edge located on the right side of the displayed page in the fore-edge, and the left fore-edge refers to a fore-edge located the left side of the displayed page in the fore-edge.

Further, in step 213, the controller 101 identifies whether the user inputs a page turn gesture. Here, the page turn gesture includes a first gesture of touching a particular page included in the displayed fore-edge and a second gesture of dragging from the displayed page to the particular page within the displayed fore-edge. In the event that the page turn gesture is input, the controller 101 proceeds to step 215. If no page turn gesture is input, the controller 101 returns to step 213.

At step 215, the controller 101 determines a page corresponding to the page turn gesture and then proceeds to step 217. At this time, when the page turn gesture is the first gesture, the controller 101 may determine the page by using Equation (1). When the page turn gesture is the second gesture, the controller 101 may determine the page by using Equation (2).

At step 217, the controller 101 outputs the determined page through the display unit 103. The controller 101 may display an image showing that the displayed page is turned to the determined page. In addition, the controller 101 may display an image showing that the page is turned while gradually reducing a speed at which the displayed page is turned to the determined page using Equation (3) to determine the speed at which the page is turned.

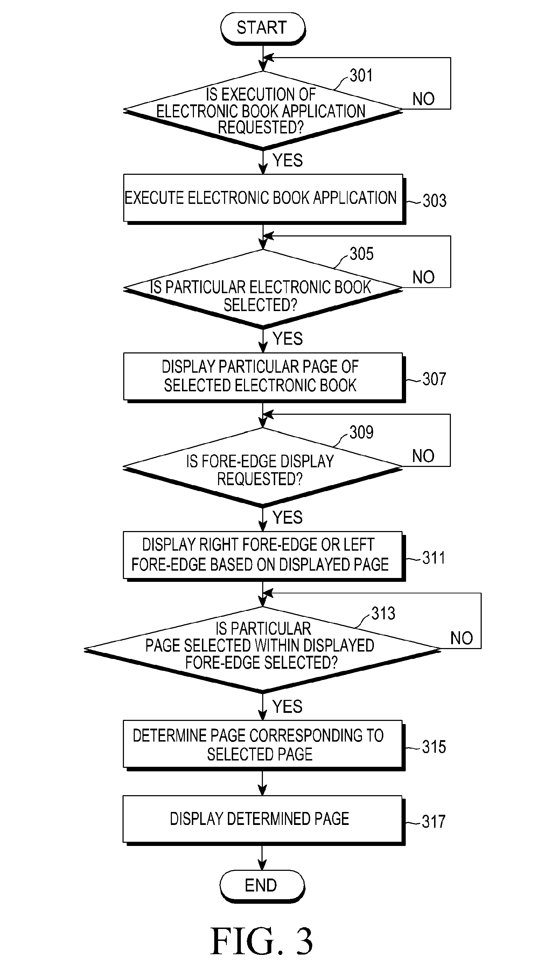

FIG. 3 is a flowchart of displaying a page of the electronic book in the portable terminal according to a first exemplary embodiment of the present invention.

Referring to FIG. 3, in step 301, the controller 101 identifies whether an execution of an electronic book application is requested by the user. The electronic book application refers to an application for outputting a selected through the display unit 103. As a result of the identification, when the execution of the electronic book application is requested, the controller 101 proceeds to step 303. If the electronic book application is not requested, the controller 101 returns to step 301.

At step 303, the controller 101 executes the electronic book application and outputs the electronic books stored in the memory unit 105 through the display unit 103, and then proceeds to step 305. The controller 101 may output the electronic books as images corresponding to the electronic books.

Further, at step 305, the controller 101 identifies whether one of the displayed electronic books is selected by the user. As a result of the identification, when an electronic book is selected, the controller 101 proceeds to step 307. If an electronic book is not selected, the controller returns to step 305. At step 307, the controller 101 searches for the selected electronic book in the memory unit 105, outputs a particular page of the selected electronic book through the display unit 103, and then proceeds to step 309. The particular page generally refers to a predetermined page.

At step 309, the controller 101 identifies whether a fore-edge display gesture for displaying a fore-edge is input by user. The fore-edge display gesture includes a gesture of axially rotating a right side or a left side of the portable terminal in an upward direction. As a result of the identification, when the fore-edge display gesture is input, the controller 101 proceeds to step 311. If the fore-edge gesture is not input, the controller 101 returns to step 309. At step 311, the controller 101 displays a right fore-edge or a left fore-edge based on the fore-edge gesture, and then proceeds to step 313.

For example, the controller 101 may identify whether the right side or the left side of the portable terminal is axially rotated in the upward direction by at least at a predetermined angle. In this example, the controller may identify the axial rotation of the portable terminal by using a gyro sensor (not shown), the predetermined angle may be predetermined within a range from 10 to 90 degrees, and the upward direction refers to a direction perpendicular to a front surface of the portable terminal.

As a result of the identification, when the right side of the portable terminal is axially rotated, the controller 101 may display the displayed page and the right fore-edge in the right side of the displayed page. When the left side of the portable terminal is axially rotated, the controller 101 may display the displayed page and the left fore-edge in the left side of the displayed page. Here, the fore-edge refers to where the electronic book that can be opened, the right fore-edge refers to a fore-edge located on the right side of the displayed page, and the left fore-edge refers to a fore-edge located on the left side of the displayed page.

Further, in step 313, the controller 101 identifies whether a first gesture of touching a particular page in the displayed fore-edge is input by the user. As a result of the identification, when the first gesture is input, the controller 101 proceeds to step 315. If the first gesture is not input, the controller 101 returns to step 313. At step 315, the controller 101 determines a page corresponding to the first gesture, and then proceeds to step 317. The controller 101 may determine the page by using Equation (1).

Further, at step 317, the controller 101 outputs the determined page through the display unit 103. That is, the controller 101 may output an image showing that the displayed page is being turned to the determined page. In addition, the controller 101 may output the image showing that the page is turned while reducing a speed at which the displayed page is turned to the determined page using Equation (3) to determine the speed.

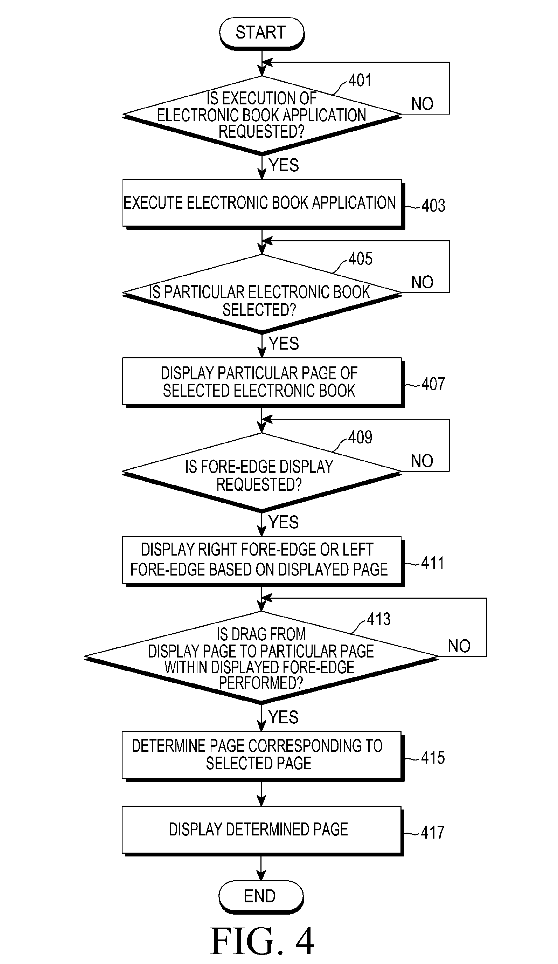

FIG. 4 is a flowchart of displaying a page of the electronic book in the portable terminal according to a second exemplary embodiment of the present invention.

Referring to FIG. 4, in step 401, the controller 101 identifies whether an execution of an electronic book application is requested by the user. The electric application is an application for outputting a selected electronic book through the display unit 103. As a result of the identification, when the execution of the electronic book application is requested, the controller 101 proceeds to step 403. If the execution of the electronic book application is not requested, the controller 101 returns to step 401.

At step 403, the controller 101 executes the electronic book application, outputs electronic books stored in the memory unit 105 through the display unit 103, and then proceeds to step 405. The controller 101 may output the electronic books as images corresponding to the electronic books.

Further, at step 405, the controller 101 identifies whether one of the displayed one or more electronic books is selected by the user. As a result of the identification, when one of the electronic books is selected, the controller 101 proceeds to step 407. If an electronic book is not selected, the controller 101 returns to step 405. At step 407, the controller 101 searches for the selected electronic book in the memory unit 105, outputs a particular page of the selected electronic book through the display unit 103, and proceeds to step 409. The particular page generally refers to a predetermined page.

Further, at step 409, the controller 101 identifies whether a fore-edge display gesture for displaying a fore-edge is input by user. Here, the fore-edge display gesture includes a gesture of axially rotating a right side or a left side of the portable terminal in an upward direction. When the fore-edge display gesture is input, the controller 101 proceeds to step 411. If the fore-edge display gesture is not input, the controller 101 returns to step 409. At step 411, the controller 101 displays a right fore-edge or a left fore-edge based on the displayed page, and then proceeds to step 413.

For example, the controller 101 may identify whether the right side or the left side of the portable terminal axially rotates in the upward direction by at least a predetermined angle using the gyro sensor (not shown). The predetermined angle may be determined within a range from 10 to 90 degrees, and the upward direction refers to a direction perpendicular to a front surface of the portable terminal.

As a result of the identification, when the right side of the portable terminal is axially rotated, the controller 101 may display the displayed page and the right fore-edge on the right side of the displayed page. When the left side of the portable terminal is axially rotated, the controller 101 may display the displayed page and the left fore-edge on the left side of the displayed page. The fore-edge refers to a part where the electronic book can be opened, the right fore-edge refers to a fore-edge located on the right side of the displayed page in the fore-edge, and the left fore-edge refers to a fore-edge located on the left side of the displayed page in the fore-edge.

Further, at step 413, the controller 101 identifies whether a second gesture of dragging from the displayed page to the particular page in the displayed fore-edge is input. As a result of the identification, when the second gesture is input, the controller 101 proceeds to step 415. If the second gesture is not input, the controller 101 returns to step 413. At step 415, the controller 101 determines a page corresponding to the second gesture using Equation (2), for example, and then proceeds to step 417.

At step 417, the controller 101 outputs the determined page through the display unit 103. That is, the controller 101 may display an image showing that the displayed page is being turned to the determined page. In addition, the controller 101 may display the image showing that the page is turned while gradually reducing a speed at which the displayed page is turned to the determined page using Equation (3) to determine the speed.

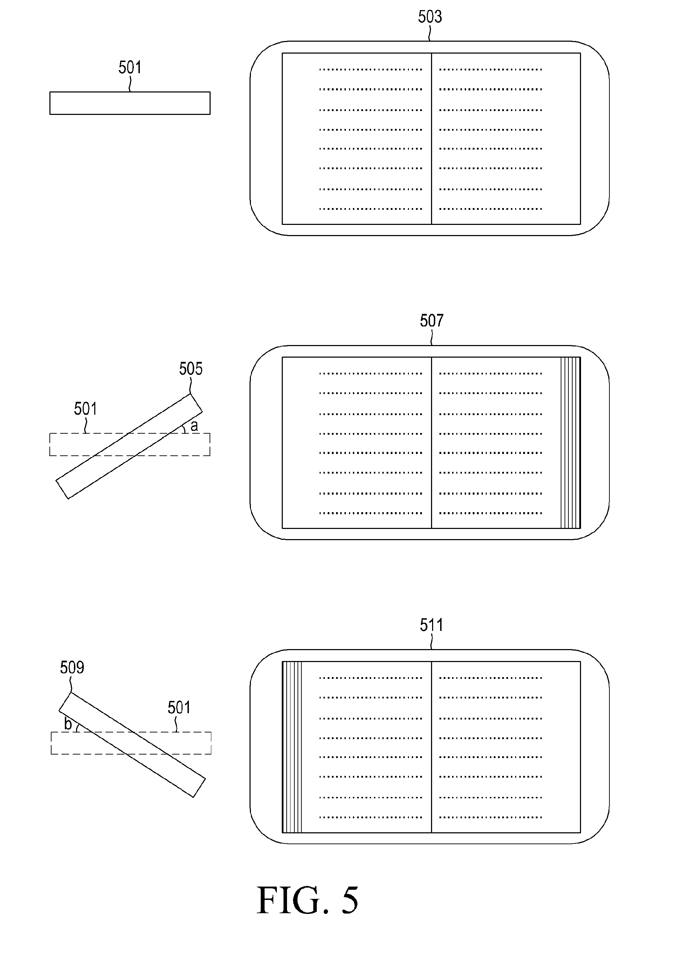

FIG. 5 illustrates a screen displaying a fore-edge of the electronic book in the portable terminal according to an exemplary embodiment of the present invention.

Reference numeral 501 illustrates a side view of the portable terminal when an electronic book application is executed by the user and a particular electronic book is selected. At this time, the portable terminal may be level with respect to the ground surface. Further, the portable terminal displays the particular page of the selected electronic book as illustrated at reference numeral 503 illustrating a top view of the portable terminal.

Reference numeral 505 illustrates a side view of the portable terminal when a right side of the portable terminal is axially rotated by the user in an upward direction at an angle of a. Accordingly, the portable terminal may display the displayed particular page and a right fore-edge based on the displayed particular page as illustrated in at reference numeral 507.

Further, reference numeral 509 illustrates a side view of the portable terminal when a left side of the portable terminal in the diagram 501 is axially rotated by the user in an upward direction at an angle of b. Accordingly, the portable terminal may display the displayed particular page and a left fore-edge on the displayed particular page as illustrated in at reference numeral 511.

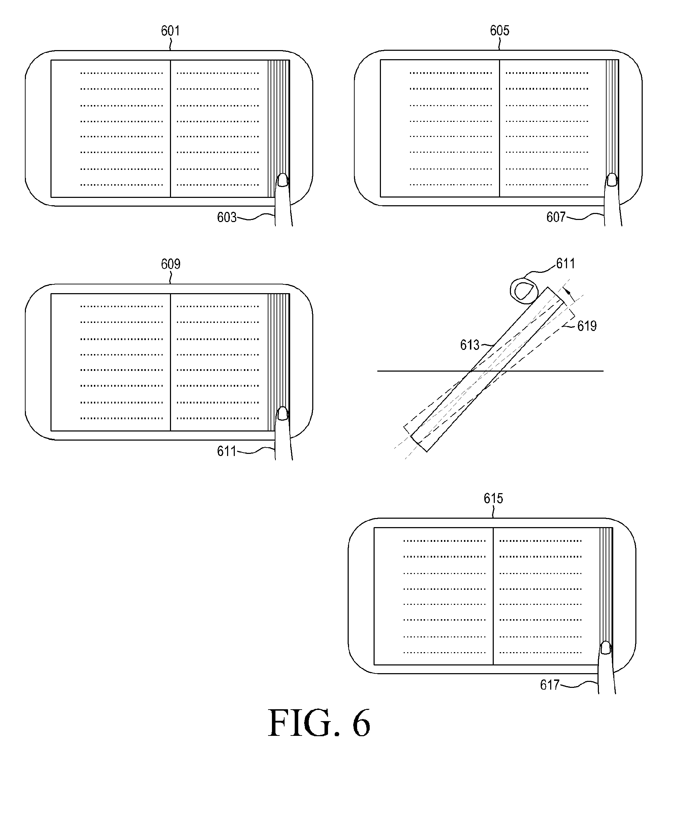

FIG. 6 illustrates a screen displaying the page of the electronic book in the portable terminal according to the first exemplary embodiment of the present invention.

Reference numeral 601 shows that the display unit outputs a particular page and a right fore-edge based on the particular page. At this time, when a particular part included in the right fore-edge is touched by a finger 603 of the user, the portable terminal determines a page number corresponding to the part of the right fore edge touched by a finger 607 of the user and displays the determined page number as illustrated at reference numeral 605.

Reference numeral 609 shows that the display unit of the portable terminal outputs a particular page and a right fore-edge based the particular page. When a particular part included in the output right fore-edge is touched by a finger 611 of the user and the portable terminal is axially rotated from reference numeral 619 to reference numeral 613 in an upward direction, the portable terminal determines a page number corresponding to the part touched by a finger 617 of the user and displays the determined page number as illustrated in a screen 615.

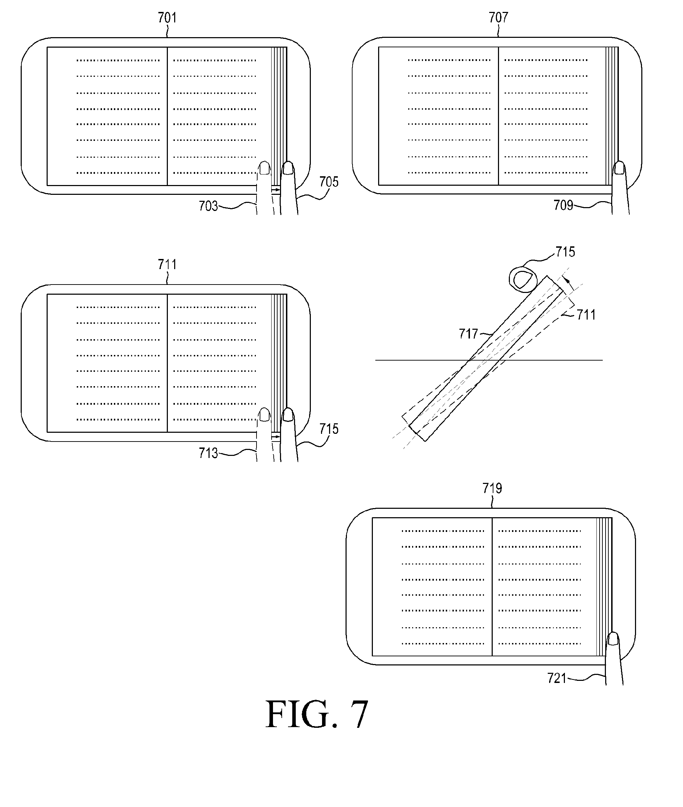

FIG. 7 illustrates a screen displaying the page of the electronic book in the portable terminal according to the second exemplary embodiment of the present invention.

Reference numeral 701 shows that the display unit of the portable terminal outputs a particular page and a right fore-edge based on the particular page. When a part of the right fore-edge is touched by a finger 703 of the user and is dragged to a particular part included in the right fore-edge located on a position designated by a finger 705 of the user, the portable terminal determines a page number corresponding to the part touched by a finger 709 and displays the determined page number as illustrated reference numeral 707.

Reference numeral 711 shows that the display unit of the portable terminal outputs a particular page and a right fore-edge based on the particular page. When the portable terminal is axially rotated from reference numeral 711 to reference numeral 717 in an upward direction after a part of the right fore edge is touched by a finger 713 of the user and then dragged to a particular part of the right side fore-edge located on a position designated by a finger 715, the portable terminal determines a page number corresponding to the part touched by a finger 721 of the user and displays the determined page number at reference numeral 719.

A terminal according to the present invention and a method of generating a live image in the terminal can be implemented as a computer readable code in a non-transitory computer readable recording medium. The computer readable recoding medium includes all types of recording devices storing data which can be read by a computer system. For example, the recording medium includes a ROM, a RAM, an optical disk, a magnetic tape, a floppy disk, a hard disk, a nonvolatile memory and the like.

While the invention has been shown and described with reference to certain embodiments thereof, it will be understood by those skilled in the art that various changes in form and details may be made therein without departing from the spirit and scope of the invention as defined by the appended claims and their equivalents.

**Claims**

1. An apparatus for controlling an electronic book in a portable terminal, the apparatus comprising:

   a display unit;
   a memory unit for storing one or more electronic books; and
   a controller for displaying a particular page of an electronic book selected from the stored electronic books through the display unit, displaying a fore-edge of the electronic book while displaying the particular page when an electronic book fore-edge display gesture is input, determining a page based on a page turn gesture when the page turn gesture is input to the displayed fore-edge, and displaying the determined page through the display unit.

2. The apparatus of claim 1, wherein the electronic book fore-edge display gesture rotates one of a left side and a right side of the portable terminal by at least a predetermined angle.

3. The apparatus of claim 2, wherein, when the left side of the portable terminal is rotated by at least the predetermined angle, the controller displays a left side of the fore-edge while displaying the particular page.

4. The apparatus of claim 2, wherein, when the right side of the portable terminal is rotated by at least the predetermined angle, the controller displays a right side of the fore-edge while displaying the particular page.

5. The apparatus of claim 1, wherein the page turn gesture includes one of a first gesture of touching a particular part of the displayed fore-edge and a second gesture of dragging from the particular page to the particular part of the displayed fore-edge.

6. The apparatus of claim 5, wherein, when the first gesture is input, the controller determines a requested page number by using a horizontal length of the displayed fore-edge, a horizontal length from a start part to the touched particular part of the displayed fore-edge, and a number of pages of the displayed fore-edge.

7. The apparatus of claim 5, wherein, when the second gesture is input, the controller determines a requested page number by using a horizontal length of the displayed fore-edge, a horizontal length from a start part to the dragged particular part of the displayed fore-edge, and a number of pages of the displayed fore-edge.

8. A method of controlling an electronic book in a portable terminal, the method comprising:

   displaying a particular page of an electronic book selected from pre-stored electronic books;
   when an electronic book fore-edge display gesture is input, displaying a fore-edge of the electronic book while displaying the particular page;
   when a page turn gesture is input to the displayed fore-edge, determining a page based on the page turn gesture; and
   displaying the determined page.

9. The method of claim 8, wherein the electronic book fore-edge display gesture rotates one of a left side and a right side of the portable terminal by at least a predetermined angle.

10. The method of claim 9, wherein displaying the fore-edge of the electronic book comprises displaying a left side of the fore-edge while displaying the particular page when the left side of the portable terminal is rotated by at least the predetermined angle.

11. The method of claim 9, wherein displaying the fore-edge of the electronic book comprises displaying a right side of the fore-edge while displaying the  particular page when the right side of the portable terminal is rotated by at least the predetermined angle.

12. The method of claim 8, wherein the page turn gesture includes one of a first gesture of touching a particular part of the displayed fore-edge and a second gesture of dragging from the particular page to the particular part of the displayed fore-edge.

13. The method of claim 12, wherein the determining of the page comprises determining a requested page number by using a horizontal length of the displayed fore-edge, a horizontal length from a start part to the touched particular part of the displayed fore-edge, and a number of pages of the displayed fore-edge when the first gesture is input.

14. The method of claim 12, wherein the determining of the page comprises determining a requested page number by using a horizontal length of the displayed fore-edge, a horizontal length from a start part to the dragged particular part of the displayed fore-edge, and a number of pages of the displayed fore-edge when the second gesture is input.

103

DISPLAY UNIT

109

WIRELESS TRANSCEIVER

111

DATA PROCESSOR

101

CONTROLLER

105

MEMORY

107

INPUT UNIT

113

AUDIO PROCESSOR

FIG. 1

START

201
IS EXECUTION OF ELECTRONIC BOOK APPLICATION REQUESTED? — NO

YES

EXECUTE ELECTRONIC BOOK APPLICATION — 203

205
IS PARTICULAR ELECTRONIC BOOK SELECTED? — NO

YES

DISPLAY PARTICULAR PAGE OF SELECTED ELECTRONIC BOOK — 207

209
IS FORE-EDGE DISPLAY REQUESTED? — NO

YES

DISPLAY RIGHT FORE-EDGE OR LEFT FORE-EDGE BASED ON DISPLAYED PAGE — 211

213
IS PAGE TURN GESTURE INPUT? — NO

YES

DETERMINE PAGE CORRESPONDING TO SELECTED PAGE — 215

DISPLAY DETERMINED PAGE — 217

END

FIG. 2

START

301
IS EXECUTION OF ELECTRONIC BOOK APPLICATION REQUESTED? — NO

YES

EXECUTE ELECTRONIC BOOK APPLICATION — 303

305
IS PARTICULAR ELECTRONIC BOOK SELECTED? — NO

YES

DISPLAY PARTICULAR PAGE OF SELECTED ELECTRONIC BOOK — 307

309
IS FORE-EDGE DISPLAY REQUESTED? — NO

YES

DISPLAY RIGHT FORE-EDGE OR LEFT FORE-EDGE BASED ON DISPLAYED PAGE — 311

313
IS PARTICULAR PAGE SELECTED WITHIN DISPLAYED FORE-EDGE SELECTED? — NO

YES

DETERMINE PAGE CORRESPONDING TO SELECTED PAGE — 315

DISPLAY DETERMINED PAGE — 317

END

# FIG. 3

START

401
IS EXECUTION OF
ELECTRONIC BOOK APPLICATION
REQUESTED?
NO

YES

EXECUTE ELECTRONIC BOOK APPLICATION 403

405
IS PARTICULAR ELECTRONIC BOOK
SELECTED?
NO

YES

DISPLAY PARTICULAR PAGE OF
SELECTED ELECTRONIC BOOK 407

409
IS FORE-EDGE DISPLAY
REQUESTED?
NO

YES

DISPLAY RIGHT FORE-EDGE OR LEFT
FORE-EDGE BASED ON DISPLAYED PAGE 411

413
IS DRAG FROM
DISPLAY PAGE TO PARTICULAR PAGE
WITHIN DISPLAYED FORE-EDGE
PERFORMED?
NO

YES

DETERMINE PAGE CORRESPONDING TO
SELECTED PAGE 415

DISPLAY DETERMINED PAGE 417

END

FIG. 4

FIG. 5

FIG. 6

FIG. 7